# EUROPÄISCHE PATENTANMELDUNG

(11) **EP 0 896 954 A1**
(43) Veröffentlichungstag der Anmeldung: **17.02.1999**
(21) Anmeldenummer: 98112943.0
(22) Anmeldetag: 13.07.1998
(51) Int. Cl.: C02F 1/32

(54) **Verdampfungsvorrichtung mit einer UV-lampe als Strahlungs-und Wärmtequelle zum Verdampfen von Flüssigkeiten, inbesondere von Flüssigkeiten mit organischer Fracht**

(30) Priorität: 14.07.1997 DE 19730059
(71) Anmelder: Weckenmann, Jürgen, 68163 Mannheim (DE); Sörensen, Martin, Dr., 68163 Mannheim (DE)
(72) Erfinder: Weckenmann, Jürgen, 68163 Mannheim (DE)

(57) **Zusammenfassung**

Die Erfindung betrifft eine Vorrichtung zur gänzlichen oder teilweisen Verdampfung von Flüssigkeiten. Eine den UV- Strahler enthaltende Quarzglasröhre wird zum Zwecke der Verdampfung von siedender Flüssigkeit umgeben. Dazu wird die Quarzglasröhre (1) von einer gelochten Röhre (2) umgeben, durch deren Bohrungen (3) [das Gehäuse zur äußeren Flüssigkeitsbegrenzung ist nicht dargestellt] die Flüssigkeit in Form radialer Strahlen (4) auf die Quarzglasröhre auftrifft und teilweise verdampft. Der Dampf und die Restflüssigkeit entweicht durch die stirnseitigen Öffnungen (5) und (6).

## Beschreibung

Die Erfindung betrifft eine Vorrichtung zur gänzlichen oder teilweisen Verdampfung von Flüssigkeiten nach dem Oberbegriff des Patentanspruchs 1, mit einem UV-Strahler als Strahlungs- und Wärmequelle, in dessen nächster Umgebung siedende Flüssigkeit kurzzeitig verweilt, so daß photochemische Reaktionen ablaufen und die zugeführte Wärmeenergie die teilweise oder gänzliche Verdampfung der Flüssigkeit bewirkt.

Eine derartige erfindungsgemäße Verdampfungseinrichtung wird für die Eindampfung von Flüssigkeiten verwendet, die mit weiteren organischen Stoffen, wie Schadstoffen, Metallkomplexbildnern oder Störsubstanzen (störend in späteren Verfahrensstufen) verunreingt sind. Mit einer solchen Einrichtung wird erreicht, daß die Flüssigkeit in ein Konzentrat und in ein Destillat aufgetrennt wird, wobei gleichzeitig durch die bekannten photochemischen Prozesse wie die Photodisoziation und die Wechselwirkung mit photolytisch gebildeten OH- Radikalen (bekannt unter dem Begriff des UV/H₂O₂- Verfahrens) ein Abbau der organischen Schadstoffe erfolgt.

Herkömmliche Verdampfungseinrichtungen zielen lediglich auf die Eindampfung von Flüssigkeiten ab, um beispelsweise anorganische Salze im flüssigen Konzentrat aufzukonzentrieren und ein salzfreies Destillat zu erhalten. Solche Verdampfer sind weithin bekannt und sind vor allem hinsichtlich der verwendeten Energiekonzeptionen in der einschlägigen Literatur beschrieben. Als Stichworte mögen gelten, Vakuumverdampfer, Vakuumverdampfer mit Wärmepumpe, Verfahren der Brüdenkompression etc..

Der Nachteil dieser bekannten Verdampfungsverfahren besteht darin, daß Flüssigkeiten, die, über die als Beispiel genannte anorganische Salzfracht hinaus, organische Störsubstanzen enthalten, von diesen während des Verdampfungsvorgangs nicht befreit werden. Damit fehlt den bekannten Verdampfern eine wesentliche Eigenschaft, wie sie beispielsweise in der galvanishen Industrie und in der Leiterplattenindustrie gefordert ist. Abwässer und Spülwässer dieser Branche enthalten neben den Schwermetallsalzen eine ganze Reihe organischer Prozeßrezepturen, die die Streufähigkeit des Bades und den Glanz der Ware beeinflussen oder in einigen Bädern als Komplexbildnern dienen. Diese organischen Substanzen sammeln sich in herkömmlichen Verdampfern zusammen mit den Metallen im Konzentrat an und erschweren die spätere Metallfällung. In solchen Fällen, wo die Rückführung des metallhaltigen Konzentrats in das galvanische Prozeßbad wirtschaftlich sinnvoll wäre, wird ein solcher Wunsch durch die dann zu erwartende Aufkonzentrierung der Organika im Prozeßbad vereitelt. Verdampfer nach dem Stand der Technik reduzieren die Ausgangsflüssigkeitsmenge lediglich auf das Konzentratvolumen, ohne die enthaltenen organischen Störstoffe abzubauen.

Dieser Nachteil wird mit den in Schutzanspruch 1 aufgeführten Merkmalen gelöst. Mit der Erfindung wird erreicht, daß die Flüssigkeit in das Strahlungsfeld eines UV-Strahlers zum Zwecke der Verdampfung gebracht wird, so daß einerseits die gesamte dem Strahler zugeführte Energie zur Flüssigkeitsverdampfung genutzt wird und andererseits der photochemische Abbauprozeß ablaufen kann. Dabei kann der Eindampfungsgrad dadurch reguliert werden, daß die Flüssigkeit mehrfach durch das Strahlungsfeld hindurchgeleitet wird.

Mit dem Merkmal nach Anspruch 2 wird eine vorteilhalte Weiterbildung der Erfindung dargestellt. Danach schützt ein Quarzglasrohr den UV- Strahler vor direkter Flüssigkeitsberührung. Das ist vor allem bei Mitteldruckstrahlern angezeigt, weil deren Oberflächentemperatur bei ca. 900°C liegt. In Anspruch 3 werden die UV-Strahlertypen genannt, die sich besonders für die erfindungsgemäße Verdampfungseinrichtung eignen. Mit den Merkmalen nach Anspruch 4 wird eine spezielle Ausführungsform der erfindungsgemäßen Verdampfungseinrichtung beschrieben. Der durch eine Quarzglasröhre geschützte UV- Strahler wird konzentrisch von einer gelochten Röhre umgeben. Durch die Löcher wird die Flüssigkeit radial auf die Quarzglasröhre aufgespritzt, so daß sie in intensiven und relativ kurzzeitigen Kontakt mit dem Strahlungsfeld des UV- Strahlers kommt. Dabei verdampft die Flüssigkeit teilweise. Mit den Ansprüchen 5 und 6 lassen sich die Siedetemperaturen den, für die UV- Oxidation bestimmter organischer Substanzen günstigsten Reaktionstemperaturen anpassen. Mit den Maßnahmen nach Anspruch 5 wird für wässrige Lösungen eine Absenkung der Verdampfungstempertur unter 100 °C erreicht, während die Ausbildung der erfindungsgemäßen Verdampfungseinrichtung nach Anspruch 6 zu einer Erhöhung der Siedetemperatur über 100 °C führt.

### Ausführungsbeispiel

Im Labor wurde das Spülwasser einer Nickelgalvanik simuliert. Dabei wurde eine wässrige Lösung folgender Zusammensetzung gewählt:
3 g/l Nickel
2 g/l Borsäure
2 g/l TOC (bestehend aus einem handelsüblichen Glanzbildner)

7 Liter dieser Lösung wurden bei einem Absolutdruck von ca. 0,2 bar mit UV- Licht unter Hinzugabe von H₂O₂ behandelt. Nach der Behandlungszeit von 4 Stunden war die Flüssigkeit soweit verdampft, daß ein Konzentratvolumen von 0,7 Litern zurückblieb. Die Analyse ergab:
31 g/l Nickel
0,5 g/l TOC

Damit zeigt dieses Ausführungsbeispiel die vorteilhafte Anwendung der erfindungsgemäßen Verdampfungseinrichtung zur Spülwasseraufbereitung in Galvaniken.

Während das Kondensat an Stelle von Frischwasser in den Produktionskreislauf rezykliert werden kann, kann das von Organika befreite Nickelkonzentrat in das Produktionsbad zurückgespeist werden, um die Ausschleppungsverluste zu kompensieren. Das Ziel der abwasserfreien Galvanik ist mit dieser erfindungsgemäßen Verdampfungseinrichtung in greifbare Nähe gerückt.

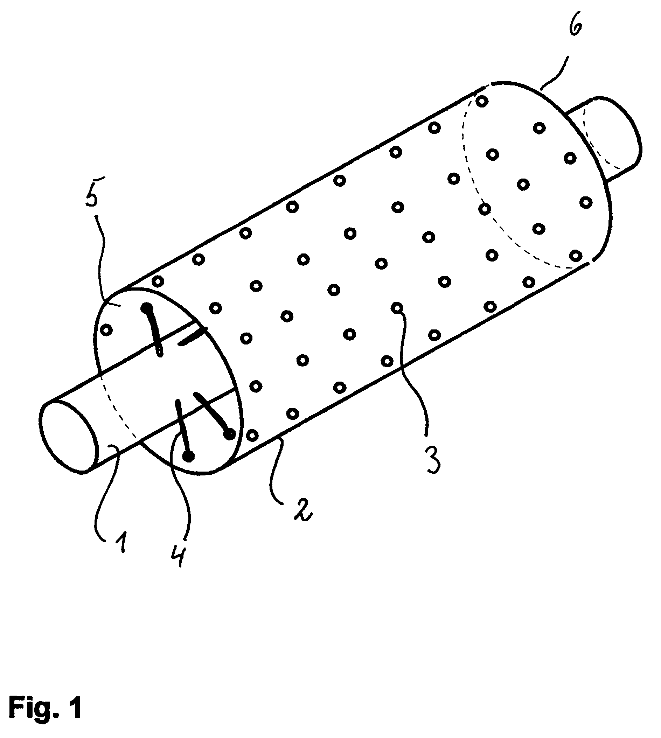

Ein weiteres Ausführungsbeispiel der Erfindung wird in der Fig. 1 erläutert.

Diese Figur zeigt das erfindungsgemäße Prinzip gemäß Anspruch 1,2 und 4. Die den UV- Strahler enthaltende Quarzglasröhre (1) [der UV- Strahler ist nicht dargestellt] wird von einer Röhre (2) umgeben, die mit mehreren Bohrungen (3) versehen ist. Die Flüssigkeit tritt über die Bohrungen (3) [das Gehäuse zur äußeren Flüssigkeitsbegrenzung ist nicht dargestellt] in Form radialer Strahlen (4) auf die Quarzglasröhre auf und verdampft teilweise. Der Dampf und die Restflüssigkeit entweicht durch die stirnseitigen Öffnungen (5) und (6). Eine Verkrustung der Quarzglasröhre kann ausgeschlossen werden, weil die Flüssigkeit nicht vollständig, sondern nur teilweise verdampft und die Flüssigkeitsstrahlen eine hydrodynamische Reinigungswirkung besitzen.

## Patentansprüche

1. Verdampfungsvorrichtung mit einer UV-Lampe als Strahlungs- und Wärmequelle zum Verdampfen von Flüssigkeiten, insbesondere von Flüssigkeiten mit organischer Fracht
dadurch gekennzeichnet,
daß in einem Behälter ein UV-Strahler so von siedender Flüssigkeit umgeben ist, daß die Flüssigkeit teilweise oder gänzlich verdampft und als Dampf und Flüssigkeitskonzentrat den Behälter verläßt.

2. Verdampfungsvorrichtung nach Anspruch 1
dadurch gekennzeichnet, daß der UV-Strahler von einer Quarzglasröhre zum Schutz vor direktem Flüssigkeitskontakt umgeben ist.

3. Verdampfungsvorrichtung nach Anspruch 1
dadurch gekennzeichnet,
daß der UV-Strahler ein Quecksilbermitteldruck - oder Niederdruckstrahler ist

4. Verdampfungsvorrichtung Anspruch 1 und 2
dadurch gekennzeichnet,
daß die Quarzglasröhre von einer gelochten Röhre umgeben wird, so daß die siedende Flüssigkeit in Form von Flüssigkeitsstrahlen radial auf die Quarzglasröhre auftrifft.

5. Verdampfungsvorrichtung nach Anspruch 1
dadurch gekennzeichnet,
daß der Druck im Behälter unterhalb des Umgebungsdrucks liegt, und der Dampf mittels eines Verdichters aus dem Behälter abgesaugt wird.

6. Verdampfungsvorrichtung nach Anspruch 1
dadurch gekennzeichnet,
daß der Druck im Behälter oberhalb des Umgebungsdrucks liegt, und die zu verdampfende Flüssigkeit mittels einer Pumpe in den Behälter gedrückt wird.
